# EUROPÄISCHE PATENTSCHRIFT

(11) **EP 2 848 434 B1**
(45) Veröffentlichungstag und Bekanntmachung des Hinweises auf die Patenterteilung: **24.10.2018**
(21) Anmeldenummer: 14176635.2
(22) Anmeldetag: 11.07.2014
(51) Int. Cl.: B60C 9/22, B60C 19/08

(54) **Fahrzeugluftreifen**
Pneumatic tyres for a vehicle
Pneus de véhicule

(30) Priorität: 11.09.2013 DE 102013109972
(43) Veröffentlichungstag der Anmeldung: 18.03.2015
(73) Patentinhaber: Continental Reifen Deutschland GmbH, 30165 Hannover (DE)
(72) Erfinder: Frerichs, Udo, 30855 Langenhagen (DE)
(74) Vertreter: Finger, Karsten

(56) Entgegenhaltungen:
- EP-B1- 2 027 991
- DE-A1-102010 037 711
- JP-A- 2010 159 017
- JP-A- 2014 015 094

## Beschreibung

Die Erfindung betrifft einen Fahrzeugluftreifen mit einem Unterbau aufweisend zwei Wulstbereiche, zwei Seitenwände, einen Gürtel und eine Karkasse, welche sich von einem Wulstbereich über die Seitenwände zum anderen Wulstbereich erstreckt, mit einer radial außerhalb des Unterbaus angeordneten Bandagenlage einer Gürtelbandage und mit einem hierzu radial außerhalb angeordneten Oberbau aufweisend einen Laufstreifen, wobei die Bandagenlage mit elastomerem Material ummantelte Festigkeitsträger enthält, die parallel in Umfangsrichtung des Fahrzeugluftreifens entlang der axialen Breite gewickelt sind.

Es ist bekannt, dass es für die Reduzierung des Rollwiderstandes von Fahrzeugluftreifen von Vorteil ist, Fahrzeugluftreifenbauteile, insbesondere den Laufstreifen, aus Kautschukmischungen mit niedriger Hysterese herzustellen. Zu den diesbezüglich eingesetzten Maßnahmen gehören insbesondere die Verwendung gering aktiver Füllstoffe, die Verwendung einer geringen Menge an aktivem Füllstoff oder der Einsatz von Kieselsäure anstelle von Ruß. Jede dieser genannten Maßnahmen hat eine Erhöhung des elektrischen Widerstandes der Kautschukmischung bzw. des aus dieser Mischung hergestellten Bauteils zur Folge. Diese rollwiderstandsarm ausgelegten Fahrzeugluftreifenbauteile weisen einen derart hohen elektrischen Widerstand auf, dass sie elektrisch nicht mehr leitfähig sind. Es ist somit eine ausreichende elektrische Leitfähigkeit des Fahrzeugluftreifens, welche zur Ableitung elektrischer Ladungen von der Felge über den Fahrzeugluftreifen zur Fahrbahn- als Folge der elektrostatischen Aufladung des Fahrzeuges - notwendig ist, nicht mehr gegeben.

Eine Vielzahl von Patentdokumenten befasst sich mit der Herstellung und Ausführung elektrisch leitfähiger Passagen in solchen Reifen, um eine ausreichende elektrische Leitfähigkeit sicherzustellen bzw. im Reifen leitfähige Verbindungen zu elektrisch leitfähigen Komponenten des Reifens oder zur Felge zu schaffen.

*Ein Reifen der eingangs genannten Art ist beispielsweise aus der* JP 2010 159017 A *bekannt. Dieser Reifen weist einen Carbon Center Beam im Laufstreifen und einen zweilagigen Gürtelverband auf wobei um die seitlichen Ränder der radial inneren Gürtellage je ein elektrisch leitfähiger Kantengummi umgeschlagen ist. Radial außerhalb des Gürtelverbandes verläuft eine Bandagenlage, welche im Bereich des Kantengummis einen Spalt aufweist, sodass eine zwischen der Bandagenlage und dem Laufstreifen verlaufende elektrisch leitfähige Gummilage durch den Spalt hindurch den Kantengummi berührt, welcher mit einem elektrisch leitfähigen Gürtelkantenpolster in Kontakt steht.*

*Die* JP 2014 015094 A *offenbart einen Fahrzeugluftreifen mit einem einen Cap*/*Base-Aufbau aufweisenden elektrisch nicht leitfähigen Laufstreifen. Radial außerhalb des Gürtelverbandes ist eine partiell unterbrochene Gürtelbandage vorgesehen. Durch die Durchbrüche reicht elektrisch leitfähiges Gummimaterial eines den Laufstreifen durchsetzenden Carbon Center Beams bis zur elektrisch leitfähigen Gürtelgummierung.*

Aus der EP 2 027 991 B1 ist ferner ein Fahrzeugluftreifen bekannt, dessen Laufstreifen in Umfangsrichtung des Fahrzeugluftreifens einen Einschnitt enthaltend elektrisch leitfähiges Material aufweist. Der Einschnitt erstreckt sich über die gesamte radiale Richtung des Laufstreifens, wodurch das darin enthaltene elektrisch leitfähige Material eine elektrisch leitfähige Passage zwischen der Außenseite des Laufstreifens und zumindest einem weiteren elektrisch leitfähigen Bauteil, das an der radial inneren Seite des Laufstreifens angeordnet ist, herstellt.

Bei dem aus der DE 10 2010 037 711 A1 bekannten Fahrzeugluftreifen sind Streifen aus einer elektrisch leitfähigen Kautschukmischung vorgesehen, welche als Teil der Karkasse an der äußeren Seite der Karkasslage und somit innenseitig der aus Gummi bestehenden Seitenwand verlaufen und sich zwischen einem elektrisch leitfähigen Bauteil im Wulstbereich und dem Gürtel erstreckt. Diese Streifen bilden somit eine elektrisch leitfähige Passage zwischen dem rollwiderstandarm ausgerüsteten Laufstreifen und der Felge.

Die Reduzierung des Rollwiderstandes von Fahrzeugluftreifen gewinnt zunehmend an Bedeutung. Der Einsatz von den Rollwiderstand reduzierenden, in der Regel elektrisch nicht leitfähigen, Kautschukmischungen in Fahrzeugluftreifen ist ein wichtiges Thema. Somit geht die Entwicklung dahin, die elektrische Leitfähigkeit von Fahrzeugluftreifen durch elektrisch leitfähige Passagen sicherzustellen.

Der Erfindung liegt nun die Aufgabe zu Grunde, einen Fahrzeugluftreifen bereit zu stellen, dessen elektrische Leitfähigkeit zuverlässig sichergestellt ist und der einfach herstellbar ist.

Gelöst wird die gestellte Aufgabe in Bezug auf den Fahrzeugluftreifen erfindungsgemäß dadurch, dass die Bandagenlage in ihrer axialen Richtung zwei Bandagenlagenteile aufweist, wobei das elastomere Material des ersten Bandagenlagenteils elektrisch leitfähig ist und das elastomere Material des zweiten Bandagenlagenteils elektrisch nicht leitfähig ist und wobei das erste, elektrisch leitfähige, Bandagenlagenteil einen elektrisch leitfähigen Bereich des Oberbaus, welcher mit der Außenseite des Laufstreifens elektrisch leitfähig in Kontakt steht, sowie einen elektrisch leitfähigen Bereich des Unterbaus, welcher mit der Kontaktfläche zur Felge elektrisch leitfähig in Kontakt steht, jeweils elektrisch leitfähig kontaktiert.

Durch eine solche Bandagenlage der Gürtelbandage ist durch das elektrisch leitfähige elastomere Material des elektrisch leitfähigen Bandagenlagenteils auf einfache Art und Weise eine elektrisch leitfähige Passage zwischen Oberbau und Unterbau geschaffen. Der Unterbau und/oder der Oberbau können dabei eine oder mehrere weitere Bandagenlagen der Gürtelbandage umfassen.

Das elektrisch leitfähige Bandagenlagenteil ist in seiner axialen Ausdehnung dabei so ausgelegt, dass es zumindest den axialen Abstand zwischen dem elektrisch leitfähigen Bereich des Unterbaus und dem elektrisch leitfähigen Bereich des Oberbaus überbrückt und beide Bereiche elektrisch leitfähig kontaktiert und elektrisch leitfähig verbindet. Somit ist ein durchgehender elektrisch leitfähiger Pfad von der Kontaktfläche des Fahrzeugluftreifens zur Felge bis zur Außenseite des Laufstreifens, welche beim Einsatz des Fahrzeugluftreifens mit der Fahrbahn in Kontakt steht, gegeben. Die elektrische Leitfähigkeit des Fahrzeugluftreifens ist zuverlässig sichergestellt.

Für die zuverlässige Ableitung der elektrostatischen Ladung wird üblicherweise ein Gesamtwiderstand des Fahrzeugluftreifens von maximal 1x10⁸ Ω gefordert. Dies kann dadurch erreicht werden, dass die elektrisch leitfähige elastomere Mischung des elektrisch leitfähigen Bandagenlagenteils, je nach geometrischer Ausbildung des elektrisch leitfähigen Pfades durch das elektrisch leitfähige Bandagenlagenteil, einen spezifischen elektrischen Widerstand von höchstens 1x10⁸ Ω·cm aufweist.

Die Bandagenlagenteile der Bandagenlage werden bei der Herstellung des Fahrzeugluftreifens nacheinander oder gleichzeitig aufgebracht, bevorzugt gewickelt oder gespult. Axial benachbarte Bandagenlagenteile werden dabei in axialer Richtung kontaktierend, überlappend oder beabstandet, insbesondere mit einem Überlapp oder Abstand von maximal einer Gummierungsdicke, aufgebracht. Der Fahrzeugluftreifen kann somit auf einfache und auf übliche Art und Weise hergestellt werden. Es müssen keine zusätzlichen Bauteile in den Fahrzeugluftreifen eingebracht werden und der Reifenaufbau ist unverändert. Bei der Herstellung eines solchen Fahrzeugluftreifens ist somit keine bzw. nur eine minimale Anpassung der Produktionsschritte und / oder der Produktionsmaschinen erforderlich.

Es ist somit ein Fahrzeugluftreifen bereitgestellt, dessen elektrische Leitfähigkeit zuverlässig sichergestellt ist und der einfach herstellbar ist.

Durch die Beschränkung des elektrisch leitfähigen elastomeren Materials der Bandagenlage auf das elektrisch leitfähige Bandagenlagenteil kann der Einsatz an elektrisch leitfähigem elastomerem Material für die elektrisch leitfähige Passage zwischen Oberbau und Unterbau gering gehalten werden. Die elektrische Leitfähigkeit des Fahrzeugluftreifens ist trotzdem zuverlässig sichergestellt. Das elektrisch nicht leitfähige elastomere Material des zweiten Bandagenlagenteils kann eine niedrige Hysterese aufweisen. Somit erzeugt es im Fahrbetrieb weniger verformungsinduzierte Energieverluste als elastomeres Material hoher Hysterese und trägt zu einer Reduktion des Rollwiderstandes bei.

Es ist vorteilhaft, wenn das elektrisch leitfähige Bandagenlagenteil ein axial äußeres Ende der Bandagenlage bildet. Das axial äußere Ende des Bandagenlagenteils kann auf einfache Art und Weise einen elektrisch leitfähigen Bereich des Unterbaus kontaktieren. Bevorzugt bedeckt das axial äußere Ende dabei die Gürtelkante und/oder wird über die Gürtelkante hinaus zu einem elektrisch leitfähigen Bereich des Unterbaus wie dem Seitenstreifen, einer elektrisch leitfähigen Schicht zwischen Karkasse und Seitenstreifen oder einem anderweitigen elektrisch leitfähigen Bauteil weitergeführt.

Vorteilhaft ist es, wenn der elektrisch leitfähige Bereich des Unterbaus, der von dem elektrisch leitfähigen Bandagenlagenteil kontaktiert wird, die Karkasse ist. Dabei kann die Karkassgummierung ganz oder teilweise, eine Karkassauflage und/oder die Festigkeitsträger der Karkasse elektrisch leitfähig gebildet sein. Der axial äußere Bereich des elektrisch leitfähigen Bandagenlagenteils kann dabei auf einfache Art und Weise bis zur Karkasse weitergeführt werden und diese elektrisch leitfähig kontaktieren, wodurch die elektrische Leitfähigkeit zuverlässig sichergestellt ist.

Es ist von Vorteil, wenn die Bandagenlage an ihrem anderen axial äußeren Ende ein weiteres elektrisch leitfähiges Bandagenlagenteil aufweist. Eine Ableitung der elektrischen Ladung erfolgt somit über zwei elektrisch leitfähige Passagen und die elektrische Leitfähigkeit des Fahrzeugluftreifens ist noch zuverlässiger sichergestellt. Zudem ist ein symmetrischer Fahrzeugluftreifenaufbau möglich. Zwischen den beiden elektrisch leitfähigen Bandagenlagenteilen ist ein elektrisch nicht leitfähiges Bandagenlagenteil angeordnet, dessen elastomeres Material eine geringe Hysterese aufweist und somit zu einem reduzierten Rollwiderstand beiträgt.

Vorteilhaft ist es auch, wenn das elektrisch leitfähige Bandagenlagenteil den axial mittigen Bereich der Bandagenlage umfasst. Der axial mittige Bereich umfasst zumindest die axiale Mitte des Fahrzeugluftreifens. Ein ebenfalls axial mittig angeordneter elektrisch leitfähiger Bereich des Oberbaus kann somit auf einfache Art und Weise kontaktiert werden. Umfasst der Oberbau einen radial außenseitig auf die Bandagenlage folgenden Laufstreifen, so kann der elektrisch leitfähige Bereich des Oberbaus einen Mischungsstreifen aus einem elektrisch leitfähigen Gummi umfassen, der axial mittig in den Laufstreifen eingebracht ist und diesen durchdringt. Bei dem Mischungsstreifen kann es sich auch um einen sogenannten Carbon-Center-Beam handeln, der, ausgehend von der - zumindest in diesem Bereich elektrisch leitfähig ausgebildeten - Laufstreifenbase, die Laufstreifencap durchdringt.

Zweckmäßig ist es, wenn das elektrisch leitfähige Bandagenlagenteil von einem axial äußeren Rand der Bandagenlage mit Kontaktbereich zum elektrisch leitfähigen Bereich des Unterbaus bis zur axialen Mitte der Bandagenlage oder über die axiale Mitte der Bandagenlage hinaus geführt wird.

Auch ist es von Vorteil, wenn sich das elektrisch leitfähige Bandagenlagenteil und das elektrisch nicht leitfähige Bandagenlagenteil der Bandagenlage auch in Material, Aufbau und/oder Anordnung der Festigkeitsträger unterscheiden. Ein solcher Fahrzeugluftreifen kann bei zuverlässiger elektrischer Leitfähigkeit und ohne weitere zusätzliche Schritte beim Reifenbau bezüglich weiterer Eigenschaften optimiert werden. Eine gute Hochgeschwindigkeitstauglichkeit wird beispielsweise erreicht, indem das Bandagenlagenteil im axial mittigen Bereich Festigkeitsträger mit einem niedrigeren Elastizitätsmodul aufweist als das Bandagenlagenteil in einem axial äußeren Bereich. Weiter können Festigkeitsträger aus unterschiedlich gebildeten Garnen und/oder Korden kombiniert werden. Die Festigkeitsträger können sich auch in ihrer Feinheit und/oder in ihrem axialen Abstand unterscheiden.

Vorteilhaft ist es, wenn die Gürtelbandage radial außerhalb und/oder radial innerhalb der Bandagenlage mindestens eine weitere Bandagenlage mit einem elektrisch leitfähigen Bandagenlagenteil aufweist, wenn die elektrisch leitfähigen Bandagenlagenteile der Bandagenlagen in radialer Richtung elektrisch leitfähig kontaktierend angeordnet sind und wenn das elektrisch leitfähige Bandagenlagenteil einer Bandagenlage einen elektrisch leitfähigen Bereich des Oberbaus kontaktiert und das elektrisch leitfähige Bandagenlagenteil einer anderen Bandagenlage einen elektrisch leitfähigen Bereich des Unterbaus kontaktiert. Eine elektrisch leitfähige Passage ist somit durch mehrere Bandagenlagen hindurch gewährleistet. Radial kontaktierende elektrisch leitfähige Bandagenlagenteile können hierbei in ihrer jeweiligen axialen Ausdehnung so ausgebildet sein, dass die elektrisch leitfähige Passage in radialer Richtung zuverlässig sichergestellt ist und gleichzeitig die insgesamt für die Gürtelbandage eingesetzte Menge an elektrisch leitfähigem Material reduziert ist, wodurch auch der Rollwiderstand reduziert ist. Die Bandagenlagenteile können dabei ganz oder teilweise überlappend angeordnet sein. Relativ zur ersten Bandagenlage ist jede weitere Bandagenlage aufweisend ein elektrisch leitfähiges Bandagenlagenteil somit Teil des elektrisch leitfähigen Bereichs des Unterbaus oder Oberbaus.

Weitere Merkmale, Vorteile und Einzelheiten der Erfindung werden nun anhand der Figuren, die schematische Ausführungsbeispiele darstellen, näher beschrieben. Dabei zeigt die:
Fig. 1 einen Radialschnitt durch einen erfindungsgemäßen Fahrzeugluftreifen;
Fig. 2 bis Fig. 4 jeweils einen Ausschnitt eines Radialschnitts durch einen erfindungsgemäßen Fahrzeugluftreifen.

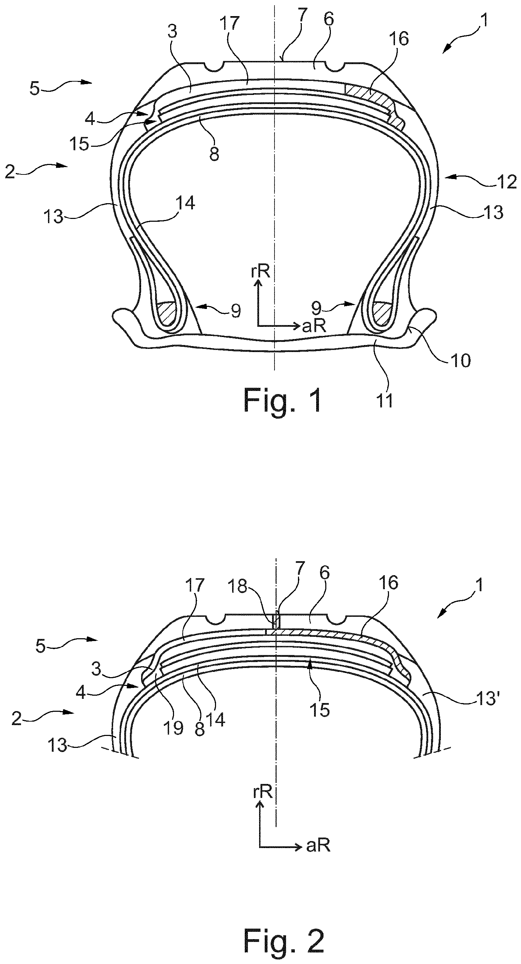

Die Figur 1 zeigt einen Radialschnitt durch einen Fahrzeugluftreifen 1 für einen Personenkraftwagen. Der dargestellte Fahrzeugluftreifen 1 weist einen Unterbau 2, eine radial außerhalb des Unterbaus 2 angeordnete Bandagenlage 3 der Gürtelbandage 4 sowie einen radial außerhalb des Unterbaus 2 angeordneten Oberbau 5 auf.

Der Oberbau 5 umfasst einen profilierten Laufstreifen 6. Der Oberbau 5 weist einen nicht dargestellten elektrisch leitfähigen Bereich auf, der mit der Außenseite 7 des Laufstreifens, welche beim Einsatz des Fahrzeugluftreifens 1 die Fahrbahn kontaktiert, elektrisch leitfähig in Verbindung steht.

Die wesentlichen Bauteile, aus welchen sich der Unterbau 2 zusammensetzt, sind eine weitgehend luftundurchlässige Innenschicht 8, zwei Wulstbereiche 9 mit Kontaktfläche 10 zur Felge 11, zwei Seitenwände 12 aufweisend je einen Seitenstreifen 13, eine mindestens eine Festigkeitsträgerlage aufweisende Karkasse 14, die in herkömmlicher Weise vom Zenitbereich des Fahrzeugluftreifens über die Seitenwände 12 bis in die Wulstbereiche 9 reicht und dort durch Umschlingen zugfester Wulstkerne verankert ist, sowie einen radial außerhalb der Karkasse 14 befindlichen, zwei Festigkeitsträgerlagen beinhaltenden Gürtel 15. Die Festigkeitsträgerlage(n) der Karkasse 14 und des Gürtels 15 weisen in elastomeres Material eingebettete Festigkeitsträger auf, die innerhalb der Festigkeitsträgerlage in herkömmlicher Weise angeordnet sind. Die Karkasse 14 ist zumindest teilweise elektrisch leitfähig ausgebildet und ist als elektrisch leitfähiger Bereich des Unterbaus 2 über weitere Maßnahmen im Wulstbereich 9 mit der Kontaktfläche 10 zur Felge 11 elektrisch leitfähig verbunden.

Zwischen Unterbau 2 und Oberbau 5 ist die Bandagenlage 3 der Gürtelbandage 4 angeordnet. Die Bandagenlage 3 deckt den Gürtel 15 inklusive der Gürtelkanten ab und beinhaltet in elastomeres Material eingebettete Festigkeitsträger, die parallel in Umfangsrichtung des Fahrzeugluftreifens 1 entlang der axialen Breite gewickelt sind. Die Bandagenlage 3 weist in ihrer axialen Richtung zwei Bandagenlagenteile 16, 17 auf, wobei das elastomere Material des ersten Bandagenlagenteils 16 elektrisch leitfähig ist und das elastomere Material des zweiten Bandagenlagenteils 17 elektrisch nicht leitfähig ist und eine niedrige Hysterese aufweist.

Das erste, elektrisch leitfähige, Bandagenlagenteil 16 kontaktiert dabei den elektrisch leitfähigen Bereich des Oberbaus 5, welcher mit der Außenseite 7 des Laufstreifens 6 elektrisch leitfähig in Kontakt steht. Das elektrisch leitfähige Bandagenlagenteil 16 bildet ein axial äußeres Ende der Bandagenlage 3, welches den durch die Karkasse 14 gebildeten elektrisch leitfähigen Bereich des Unterbaus 2 kontaktiert. Somit ist ein durchgehender elektrisch leitfähiger Pfad von der Kontaktfläche 10 des Fahrzeugluftreifens zur Felge 11 bis zur Außenseite 7 des Laufstreifens 6, welche beim Einsatz des Fahrzeugluftreifens 1 mit der Fahrbahn in Kontakt steht, gegeben. Das elektrisch nicht leitfähige elastomere Material niedriger Hysterese des zweiten Bandagenlagenteils 17 trägt zu einer Reduktion des Rollwiderstandes bei, gleichzeitig ist die elektrische Leitfähigkeit des Fahrzeugluftreifens 1 zuverlässig sichergestellt.

Die Figur 2 zeigt einen Ausschnitt eines Radialschnittes durch einen Fahrzeugluftreifen 1. Der Fahrzeugluftreifen 1 unterscheidet sich von dem in der Figur 1 gezeigten Fahrzeugluftreifen 1 darin, dass das elektrisch leitfähige Bandagenlagenteil 16 auch den axial mittigen Bereich der Bandagenlage 3 umfasst. Das elektrisch leitfähige Bandagenlagenteil 16 kontaktiert dabei den elektrisch leitfähigen Bereich des Oberbaus 5. Dieser ist durch einen Mischungsstreifen 18 aus einem elektrisch leitfähigen Gummi gegeben, der axial mittig in den Laufstreifen 6 eingebracht ist. Das elektrisch leitfähige Bandagenlagenteil 16 kontaktiert in seinem axial äußeren Bereich elektrisch leitfähigen Bereich des Unterbaus 2, der durch einen zumindest teilweise elektrisch leitfähig ausgebildeten Seitenstreifen 13' gegeben ist. Die Karkasse 14 ist elektrisch nicht leitfähig ausgebildet. Das elektrisch leitfähige elastomere Material des elektrisch leitfähigen Bandagenlagenteils 16 ist elektrisch leitfähiger Gummi mit einem spezifischen elektrischen Widerstand von höchstens 3x10⁶ Ω·cm. Der Unterbau 2 umfasst eine weitere Bandagenlage 19 der Gürtelbandage 4, die kein elektrisch leitfähiges Material aufweist. Der Rollwiderstand ist durch das rollwiderstandsarme Material des elektrisch nicht leitfähigen Bandagenlagenteils 17 reduziert. Gleichzeitig ist die elektrische Leitfähigkeit des Fahrzeugluftreifens 1 durch die Anordnung des elektrisch leitfähigen Bandagenlagenteils 16 gewährleistet.

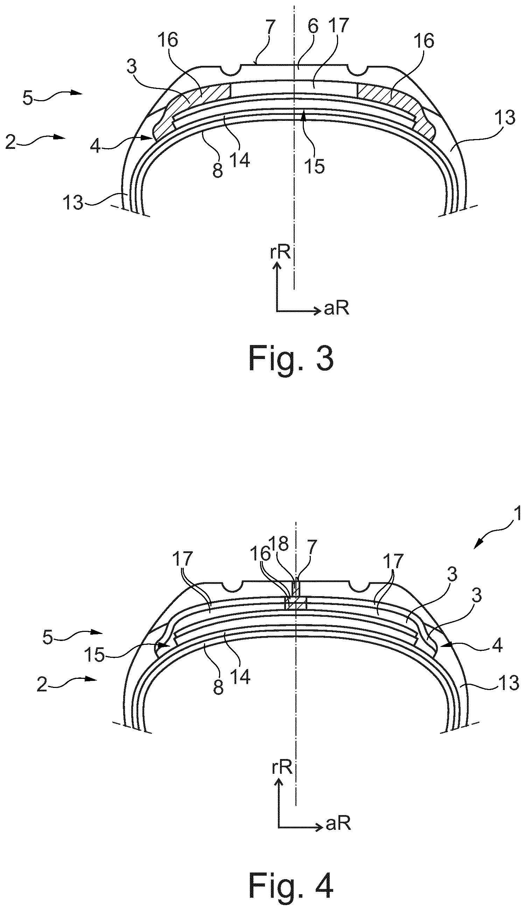

Die Figur 3 zeigt ein weiteres erfindungsgemäßes Ausführungsbeispiel. Es unterscheidet sich von dem in der Figur 1 gezeigten Ausführungsbeispiel durch einen weitgehend symmetrischen Aufbau des Fahrzeugluftreifens 1. Beide axiale Enden der Bandagenlage 3 weisen ein elektrisch leitfähiges Bandagenlagenteil 16 auf. Das elektrisch leitfähige elastomere Material des elektrisch leitfähigen Bandagenlagenteils ist elektrisch leitfähiger Gummi mit einem spezifischen elektrischen Widerstand von höchstens 1x10⁷ Ω·cm. Axial mittig ist ein elektrisch nicht leitfähiges Bandagenlagenteil 17 mit einem spezifischen elektrischen Widerstand von mindestens 1x10⁸ Ω·cm angeordnet. Auch die weiteren elektrisch leitfähigen Bereiche des Fahrzeugluftreifens 1 sind weitgehend symmetrisch angeordnet. Eine Ableitung der elektrischen Ladung erfolgt somit über zwei elektrisch leitfähige Passagen und die elektrische Leitfähigkeit des Fahrzeugluftreifens 1 ist noch zuverlässiger sichergestellt. Die elektrisch leitfähigen Bandagenlagenteile 16 weisen als Festigkeitsträger Corde aus PEN auf, die ein höheres Elastizitätsmodul aufweisen als die Corde aus Polyamid 6.6 des elektrisch nicht leitfähigen Bereichs. Die Corde unterscheiden sich zudem in ihrer Feinheit.

Die Figur 4 zeigt ein weiteres Ausführungsbeispiel gemäß der Erfindung. Es unterscheidet sich von dem in der Figur 1 gezeigten Ausführungsbeispiel dadurch, dass die Gürtelbandage 4 radial außerhalb der Bandagenlage 3 eine weitere Bandagenlage 3 umfasst. Beide Bandagenlagen 3 weisen in ihrem axial mittigen Bereich ein elektrisch leitfähiges Bandagenlagenteil 16 auf, dessen elastomeres Material einen spezifischen elektrischen Widerstand von höchstens 1x10⁸ Ω·cm aufweist. Die beiden elektrisch leitfähigen Bandagenlagenteile 16 sind somit in radialer Richtung elektrisch leitfähig kontaktierend angeordnet. Das radial äußere elektrisch leitfähige Bandagenlagenteil 16 kontaktiert einen axial mittig im Laufstreifen 6 eingebrachten Mischungsstreifen 18 aus einer elektrisch leitfähigen Kautschukmischung. Das radial innere elektrisch leitfähige Bandagenlagenteil 16 kontaktiert den als elektrisch leitfähigen Bereich des Unterbaus 2 fungierenden elektrisch leitfähig ausgebildeten Gürtel 15. Der elektrisch leitfähige Pfad von der Außenseite 7 des Laufstreifens 6 bis zur Kontaktfläche 10 zur Felge 11 ist durch zwei Bandagenlagen 3 hindurch sichergestellt. Beide Bandagenlagen 3 weisen in ihren axial äußeren Bereichen elektrisch nicht leitfähige Bandagenlagenteile 17 auf. Das elastomere Material dieser Bandagenlagenteile 17 hat einen spezifischen elektrischen Widerstand größer als 3x10⁸ Ω·cm sowie eine geringe Hysterese, wodurch der Rollwiderstand des Fahrzeugluftreifens 1 verringert ist.

### Bezugszeichenliste

### (Teil der Beschreibung)

- 1: Fahrzeugluftreifen
- 2: Unterbau
- 3: Bandagenlage der Gürtelbandage
- 4: Gürtelbandage
- 5: Oberbau
- 6: Laufstreifen
- 7: Außenseite des Laufstreifens
- 8: Innenschicht
- 9: Wulstbereich
- 10: Kontaktfläche zur Felge
- 11: Felge
- 12: Seitenwand
- 13, 13': Seitenstreifen
- 14: Karkasse
- 15: Gürtel
- 16: elektrisch leitfähiges Bandagenlagenteil
- 17: elektrisch nicht leitfähiges Bandagenlagenteil
- 18: Mischungsstreifen
- 19: Bandagenlage
- rR: radiale Richtung
- aR: axiale Richtung

## Patentansprüche

1. Fahrzeugluftreifen (1)
• mit einem Unterbau (2) aufweisend zwei Wulstbereiche (9), zwei Seitenwände (12), einen Gürtel (15) und eine Karkasse(14), welche sich von einem Wulstbereich (9) über die Seitenwände (12) zum anderen Wulstbereich (9) erstreckt,
• mit einer radial außerhalb des Unterbaus (2) angeordneten Bandagenlage (3) einer Gürtelbandage (4) und
• mit einem hierzu radial außerhalb angeordneten Oberbau (5) aufweisend einen Laufstreifen (6),
• wobei die Bandagenlage (3) mit elastomerem Material ummantelte Festigkeitsträger enthält, die parallel in Umfangsrichtung des Fahrzeugluftreifens (1) entlang der axialen Breite gewickelt sind
**dadurch gekennzeichnet, dass**
• die Bandagenlage (3) in ihrer axialen Richtung zwei Bandagenlagenteile (16, 17) aufweist,
• dass das elastomere Material des ersten Bandagenlagenteils (16) elektrisch leitfähig ist und das elastomere Material des zweiten Bandagenlagenteils (17) elektrisch nicht leitfähig ist und
• dass das erste, elektrisch leitfähige, Bandagenlagenteil (16) einen elektrisch leitfähigen Bereich des Oberbaus (5), welcher mit der Außenseite (7) des Laufstreifens (6) elektrisch leitfähig in Kontakt steht, sowie einen elektrisch leitfähigen Bereich des Unterbaus (2), welcher mit der Kontaktfläche (10) zur Felge (11) elektrisch leitfähig in Kontakt steht, jeweils elektrisch leitfähig kontaktiert.

2. Fahrzeugluftreifen (1) nach Anspruch 1, **dadurch gekennzeichnet, dass** das elektrisch leitfähige Bandagenlagenteil (16) ein axial äußeres Ende der Bandagenlage (3) bildet.

3. Fahrzeugluftreifen (1) nach zumindest einem der vorangegangenen Ansprüche, **dadurch gekennzeichnet, dass** der elektrisch leitfähige Bereich des Unterbaus (2) die Karkasse (14) ist.

4. Fahrzeugluftreifen (1) nach zumindest einem der vorangegangenen Ansprüche, **dadurch gekennzeichnet, dass** die Bandagenlage (3) an ihrem anderen axial äußeren Ende ein weiteres elektrisch leitfähiges Bandagenlagenteil (16) aufweist.

5. Fahrzeugluftreifen (1) nach zumindest einem der vorangegangenen Ansprüche, **dadurch gekennzeichnet, dass** das elektrisch leitfähige Bandagenlagenteil (16) den axial mittigen Bereich der Bandagenlage (3) umfasst.

6. Fahrzeugluftreifen (1) nach zumindest einem der vorangegangenen Ansprüche, **dadurch gekennzeichnet, dass** sich das elektrisch leitfähige Bandagenlagenteil (16) und das elektrisch nicht leitfähige Bandagenlagenteil (17) der Bandagenlage (3) auch in Material, Aufbau und/oder Anordnung der Festigkeitsträger unterscheiden.

7. Fahrzeugluftreifen (1) nach zumindest einem der vorangegangenen Ansprüche, **dadurch gekennzeichnet, dass** die Gürtelbandage (4) radial außerhalb und/oder radial innerhalb der Bandagenlage (3) mindestens eine weitere Bandagenlage (3) mit einem elektrisch leitfähigen Bandagenlagenteil (16) aufweist, dass die elektrisch leitfähigen Bandagenlagenteile (16) der Bandagenlagen (3) in radialer Richtung elektrisch leitfähig kontaktierend angeordnet sind und dass das elektrisch leitfähige Bandagenlagenteil (16) einer der Bandagenlagen (3) einen elektrisch leitfähigen Bereich des Oberbaus (5) kontaktiert und das elektrisch leitfähige Bandagenlagenteil (16) einer anderen Bandagenlage (3) einen elektrisch leitfähigen Bereich des Unterbaus (2) kontaktiert.

## Claims

1. Pneumatic vehicle tyre (1)
• with a substructure (2) comprising two bead regions (9), two sidewalls (12), a breaker belt (15) and a carcass (14), which extends from one bead region (9) over the sidewalls (12) to the other bead region (9),
• with a bandage ply (3) of a belt bandage (4), arranged radially outside the substructure (2), and
• with a superstructure (5), comprising a tread rubber (6) arranged radially outside said bandage ply,
• the bandage ply (3) containing reinforcing elements sheathed in elastomeric material, which are wound parallel in the circumferential direction of the pneumatic vehicle tyre (1) along the axial width,
**characterized in that**
• the bandage ply (3) comprises in its axial direction two bandage ply parts (16, 17),
• **in that** the elastomeric material of the first bandage ply part (16) is electrically conductive and the elastomeric material of the second bandage ply part (17) is electrically nonconductive and
• **in that** the first, electrically conductive, bandage ply part (16) contacts in an electrically conductive manner an electrically conductive region of the superstructure (5) that is in electrically conductive contact with the outer side (7) of the tread rubber (6) and contacts in an electrically conductive manner an electrically conductive region of the substructure (2) that is in electrically conductive contact with the contact surface (10) with respect to the rim (11).

2. Pneumatic vehicle tyre (1) according to Claim 1, **characterized in that** the electrically conductive bandage ply part (16) forms an axially outer end of the bandage ply (3).

3. Pneumatic vehicle tyre (1) according to at least one of the preceding claims, **characterized in that** the electrically conductive region of the substructure (2) is the carcass (14).

4. Pneumatic vehicle tyre (1) according to at least one of the preceding claims, **characterized in that** the bandage ply (3) comprises at its other axial outer end a further electrically conductive bandage ply part (16).

5. Pneumatic vehicle tyre (1) according to at least one of the preceding claims, **characterized in that** the electrically conductive bandage ply part (16) comprises the axially central region of the bandage ply (3).

6. Pneumatic vehicle tyre (1) according to at least one of the preceding claims, **characterized in that** the electrically conductive bandage ply part (16) and the electrically nonconductive bandage ply part (17) of the bandage ply (3) also differ in the material, structure and/or arrangement of the reinforcing elements.

7. Pneumatic vehicle tyre (1) according to at least one of the preceding claims, **characterized in that** the belt bandage (4) comprises radially outside and/or radially inside the bandage ply (3) at least one further bandage ply (3) with an electrically conductive bandage ply part (16), **in that** the electrically conductive bandage ply parts (16) of the bandage plies (3) are arranged in an electrically conductively contacting manner in the radial direction and **in that** the electrically conductive bandage ply part (16) of one of the bandage plies (3) contacts an electrically conductive region of the superstructure (5) and the electrically conductive bandage ply part (16) of another bandage ply (3) contacts an electrically conductive region of the substructure (2).

## Revendications

1. Pneumatique de véhicule (1), comprenant
- une sous-structure (2) présentant deux régions de talon (9), deux parois latérales (12), une ceinture (15) et une carcasse (14) qui s'étend depuis une région de talon (9) jusqu'à l'autre région de talon (9) par-dessus les parois latérales (12),
- une couche de bandage (3) d'un bandage de ceinture (4), disposée radialement à l'extérieur de la sous-structure (2) et
- une structure supérieure (5) disposée radialement à l'extérieur par rapport à celle-ci, présentant une bande de roulement (6),
- la couche de bandage (3) contenant des renforts gainés avec un matériau élastomère qui sont enroulés parallèlement dans la direction périphérique du pneumatique de véhicule (1) le long de la largeur axiale,
**caractérisé en ce que**
- la couche de bandage (3) présente, dans sa direction axiale, deux parties de couche de bandage (16, 17),
- **en ce que** le matériau élastomère de la première partie de couche de bandage (16) est électriquement conducteur et le matériau élastomère de la deuxième partie de couche de bandage (17) n'est pas électriquement conducteur et
- **en ce que** la première partie de couche de bandage électriquement conductrice (16) est en contact électriquement conducteur à chaque fois avec une région électriquement conductrice de la structure supérieure (5) qui est en contact électriquement conducteur avec le côté extérieur (7) de la bande de roulement (6), ainsi qu'avec une région électriquement conductrice de la sous-structure (2) qui est en contact électriquement conducteur avec la surface de contact (10) avec la jante (11).

2. Pneumatique de véhicule (1) selon la revendication 1, **caractérisé en ce que** la partie de couche de bandage électriquement conductrice (16) forme une extrémité axialement extérieure de la couche de bandage (3).

3. Pneumatique de véhicule (1) selon au moins l'une quelconque des revendications précédentes, **caractérisé en ce que** la région électriquement conductrice de la sous-structure (2) est la carcasse (14).

4. Pneumatique de véhicule (1) selon au moins l'une quelconque des revendications précédentes, **caractérisé en ce que** la couche de bandage (3) présente à son autre extrémité axialement extérieure une partie de couche de bandage électriquement conductrice supplémentaire (16).

5. Pneumatique de véhicule (1) selon au moins l'une quelconque des revendications précédentes, **caractérisé en ce que** la partie de couche de bandage électriquement conductrice (16) comprend la région axialement centrale de la couche de bandage (3).

6. Pneumatique de véhicule (1) selon au moins l'une quelconque des revendications précédentes, **caractérisé en ce que** la partie de couche de bandage électriquement conductrice (16) et la partie de couche de bandage non électriquement conductrice (17) de la couche de bandage (3) se distinguent également en termes de matériau, de construction et/ou de disposition des renforts.

7. Pneumatique de véhicule (1) selon au moins l'une quelconque des revendications précédentes, **caractérisé en ce que** le bandage de ceinture (4) présente radialement à l'extérieur et/ou radialement à l'intérieur de la couche de bandage (3) au moins une couche de bandage supplémentaire (3) avec une partie de couche de bandage électriquement conductrice (16), **en ce que** les parties de couche de bandage électriquement conductrices (16) des couches de bandage (3) sont disposées de manière à être en contact électriquement conducteur dans la direction radiale et **en ce que** la partie de couche de bandage électriquement conductrice (16) de l'une des couches de bandage (3) vient en contact avec une région électriquement conductrice de la structure supérieure (5) et la partie de couche de bandage électriquement conductrice (16) d'une autre couche de bandage (3) vient en contact avec une région électriquement conductrice de la sous-structure (2).
